# EUROPEAN PATENT APPLICATION

(11) **EP 1 340 700 A1**
(43) Date of publication of application: **03.09.2003**
(21) Application number: 02425578.8
(22) Date of filing: 26.09.2002
(51) Int. Cl.: B65G 61/00

(54) **Device for depalletising tile stacks**

(30) Priority: 28.02.2002 IT MO20020050
(71) Applicant: Ferrari & Cigarini S.r.l., 41053 Maranello (MO) (IT)
(72) Inventor: Ferrari, Andrea, 41053 Maranello (province of Modena) (IT)
(74) Representative: Gotra, Stefano

(57) **Abstract**

The device comprises an arm (1) having an end (1a) which is mobile and which is coupled, with ability to rotate about predetermined axes and with respect to the end (1a), to a gripping organ (2) which comprises: a first element (3) and a second element (4) which respectively define a first and a second rest plane, which first and second rest planes are perpendicular one to another, and a third element (5) which can move from an inactive position, in which it is situated above the first rest plane, to an active position, in which the third element (5) is parallel to the second element (4) and at a distance therefrom which enables the tile stack (10) to be gripped.

## Description

The usual field of application for this invention is in workshops which, generally working on behalf of third parties, perform post-firing operations on ceramic tiles. These operations include cutting, milling, etching and so on. The tiles are delivered from the ceramics factories in packs, generally packaged using cardboard wrapping which group together a certain number of packs. The packs are arranged on pallets in layers, each of which comprises numerous packs arranged side-by-side. The tiles have to be removed from the pallets, freed of the cardboard packaging which keeps all tile packs together on the pallet, and loaded on the conveyors which send them on to subsequent work stations.

The depalletising, conveyor loading and cardboard removal stages are at present carried out manually by operators. The operators manually remove the packs from the pallets and position them on conveyors where, using cutters or other manual cutting tools, free the tiles of the cardboard packaging holding them together.

The operator's task is laborious, requiring considerable physical effort as the tile packs can be very heavy. Also, the manual operation as a whole is long and expensive, as well as risky because a stack of tiles is always liable to tip over. The present invention aims at automating the above-described operations, especially depalletising the tile stacks and their subsequent loading onto the conveyors supplying the work stations. The invention obviates the drawbacks due to manual operations.

An advantage of the device is that it can be easily inserted in the normal tile working lines.

A further advantage of the device is that it can easily be used for palletising tile packs of any size.

Further characteristics and advantages of the present invention will better emerge from the detailed description that follows of the device, illustrated purely by way of a non-limiting example in the accompanying figures, in which:
figure 1 is a schematic view from above of the device of the invention working in collaboration with work operation lines;
figures 2, 3 4, 5 and 6 show a sequence of various operative configurations of the gripping organs which the device is equipped with.

The device comprises an arm 1, having an end 1a which, using movement organs of known type which enable the arm to be moved in the three spatial directions, is mobile so as to be able to reach all points in a space above a platform 9 on which one or more pallets 8 are arranged. The pallets 8 each contain various layers of tile stacks 10 to be depalletised.

One or more conveyors 11 are also located in the space above the platform 9, on which the tile stacks 10 will be placed when removed from the depalletiser device and therefrom sent on to work stations.

A gripping organ 2 is connected to the end 1a of the arm 1. The gripping organ 2 comprises a first element 3 and a second element 4 which respectively define a first and a second rest plane between their perpendiculars. The first element 3 and the second element 4 are fixed with respect to the gripping organ 2. Both elements can be made in various ways: for example, the first element 3 can be a continuous plane or a series of flat coplanar elements which define the first rest plane. It is important, however, for reasons which will better be described hereinafter, that the first element 3 is conformed and arranged in such a way as to be able to rest and press on the upper surface 10a of the tile stack 10.

The second element 4 can be a single flat element arranged perpendicular to the first element 3, or it can be made up of a series of parallel ribs defining the second rest plane.

In other words, the first element 3 and the second element 4 make up a rigid L-shaped structure with a lateral appendix (the second element 4) and an upper reference plane (the first element 3). The two elements constitute the two internal surfaces of the "L".

The gripping organ 2 further comprises a third element 5 which is mobile with respect to the rest of the gripping organ 2. In particular, the third element 5 can move from an inactive position, not visible in the figures as the third element 5 is hidden within the gripping organ 2, in which the third element 5 is positioned above the first rest plane, to an active position, visible in figures 5 and 6, in which the third element 5 is arranged parallel to the second rest plane and at a distance from the second rest plane so that the tile stack 10 to be moved can be gripped. Obviously the active position of the third element 5 is variable according to the width of the tile stack 10. For this purpose a pressure adjuster can be included, not illustrated in the figures and of known type, so that the pressure exerted on the tile stack 10 by the third element 5 when in the active position can be regulated. The surfaces of both the first element 3 and the third element 5 that come into contact with the tile stack 10 can be of a high-friction type, for example rough or rubber surfaces) so as to avoid any slipping of the tile stack 10.

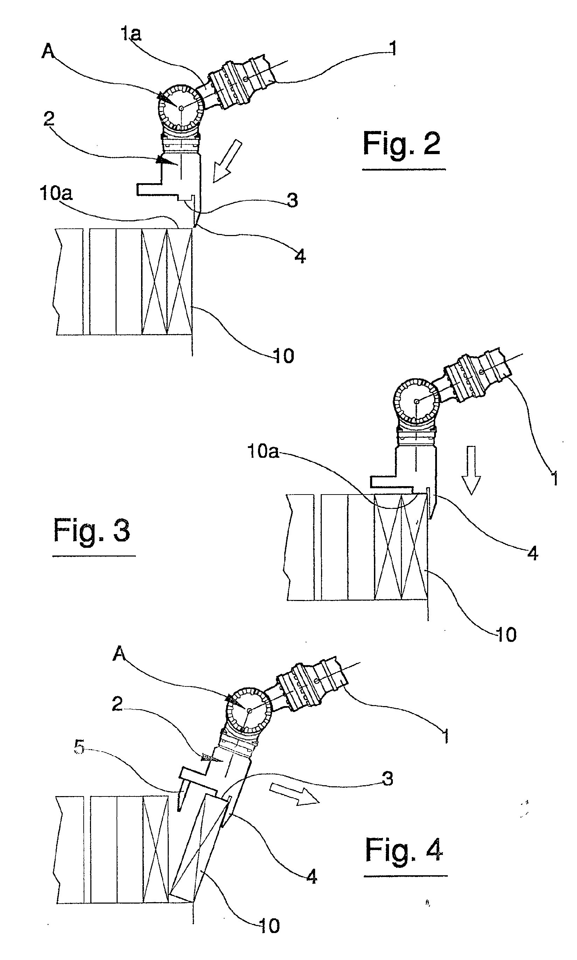

The third element 5 can be made in a single piece or from a series of ribs. In either case, for the inactive position, the third element 5 can be arranged internally of the gripping organ 2, in a position (not visible in the figures) which is parallel to and above the first rest plane. With this conformation and arrangement, to reach the active position 5 the third element 5 passes from an intermediate position, illustrated in figure 4, in which the third element 5 is arranged parallel to the second element 4 and at a distance therefrom which is greater than the thickness of the tile stack 10.

Means are provided for rotating the third element 5. The means for rotating are of known type and move the third element 5 from the inactive position to the intermediate position. Also present are means for translating, also of known type, which bring the third element 5 from the intermediate position into the active position.

For reasons which will be explained during the description that follows of the operation of the device, the gripping organ 2 can rotate about predetermined axes, with respect to the end 1a of the arm 1 to which the gripping organ is connected. In particular, the gripping organ 2 can rotate about an axis A which is parallel to the above-mentioned first and second rest planes, being respectively the first and second elements 3 and 4. To facilitate movement of the gripping organ 2, and therefore of the tile stack 10 gripped thereby, the gripping organ 2 can advantageously be enabled also to rotate about other axes, for example about the two axes which are perpendicular to axis A.

The connecting mechanisms between the gripping organ 2 and the arm 1 which enable the various desired rotations, and the motor powering the rotations, can be chosen from among any of the known-type mechanisms familiar to all mechanical experts and designers, and are therefore not further described.

The device of the invention functions as now described and as schematically illustrated in figures from 2 to 6.

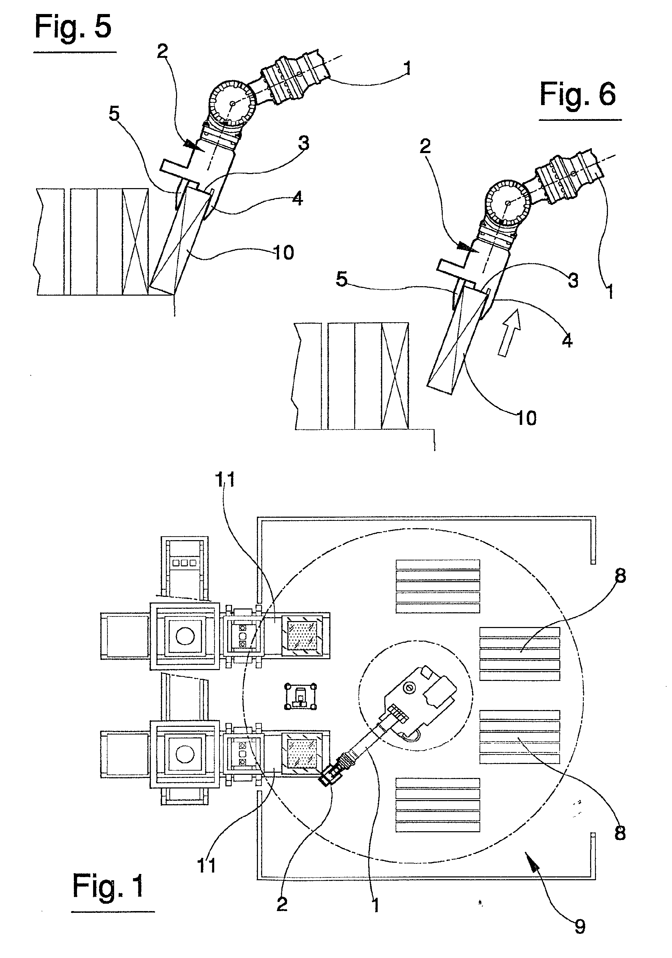

As shown in figure 1, the pallets containing the tile stacks 10 to be unloaded, and the conveyors 11 destined to send the tiles on to the work tines, are arranged on the platform 9 approximately along a circumference centred on the rotation axis of the arm 1 so that the arm 1, or more precisely the gripping organ located on the end of the arm 1, can reach everything through a combination of movements.

The pallets arranged on the platform 9 were previously freed of all materials, such as straps, heat-shrunk film and the like, which kept the stack 10 together on the pallet. During this operation, only the elements holding the whole pallet together and not those keeping two or more tile stacks 10 together are removed. Elements holding two or more tile stacks 10 together are present when one of the dimensions of the tiles in the stack is much smaller than the others, which, if the tile stacks were arranged singly, would cause considerable problems of stack stability. Where there exists this problem of stability, the gripping organ 2 grips two or three stacks together, as if they were a single stack. Later on, when the "thin" tile stacks will be laid on a large side thereof, the problem of stability will no longer exist and the single stacks can be freed of one another and sent on to further work stations.

In a first stage of the gripping operation (figure 2), the arm 1 moves the gripping organ 2, positioned vertically, bringing the second element 4 into contact with the external lateral surface of a tile stack 10. The moment of contact can be controlled by sensors.

The second stage (figure 3) sees the arm 1 bringing the gripping organ 2 downwards until the first element 3 presses on the upper surface of the tile stack 10.

In the third stage (figure 4) the gripping organ 2 is rotated about axis A so as to rotate and tilt the tile stack 10 through the combination of the rotation about axis A of the gripping organ 2 and a translation movement of the arm 1. During this movement the first element 3 exerts a vertical pressure on the stack 10, the intensity of which can advantageously be controlled by pressure sensors. The inclined stack 10 is rested on the second element 4 and cannot make undesired movements.

Following this tilting a space is created between the moved stack 10 and the adjacent stack 10, into which the third element 5 located internally of the gripping organ 2 is inserted by rotation. The third element 5 moves from the inactive position to the intermediate position.

Figure 5 depicts the moment at which the tile stack 10 is actually gripped. The third element 5, arranged parallel to the second element 4, slides towards the second element 4 until it comes into contact with the tile stack 10. With the help of pressure sensors the element 5 is stopped when the pressure exerted o the tile stack reaches a desired level. In this way the device can be used with tiles of any size and thickness.

With the third element 5 in the active position, the tile stack 10 is gripped between the second and third elements 4 and 5, aided by the first element 3, and can be lifted, as shown in figure 6, neared to one of the conveyors 11 and unloaded onto the conveyor 11 by distancing the second element 4 from the third element 5, with the third element 5 returning into the intermediate position and thus releasing the tile stack 10.

Obviously the inactive position of the third element 5 can be different from the position illustrated herein, as long as when it is in the inactive position the third element 5 does not interfere with the movements of the gripping organ 2. The means for bring the third element from the inactive position into the intermediate position can be moved differently from what is herein described. The movement itself can be different, as can the means themselves, for bringing the third element 5 from the intermediate position into the active position.

## Claims

1. A device for depalletising stacks (10) of tiles, **characterised in that** it comprises an arm (1) having an end (1a) which is mobile in space by means of movement organs, and which is coupled with ability to rotate about predetermined axes and with respect to the end (1a) to a gripping organ (2) which comprises: a first element (3) and a second element (4) which respectively define a first and a second rest plane, which first and second rest planes are perpendicular one to another; a third element (5) which can move from an inactive position, in which it is situated above the first rest plane, to an active position, which is variable according to a thickness of the tile stack (10), in which active position the third element (5) is parallel to the second rest plane defined by the second element (4) and at a distance therefrom which enables the tile stack (10) to be gripped.

2. The device of claim 1, **characterised in that** the gripping organ (2) can rotate about an axis (A) which is parallel to the first and second rest planes.

3. The device of claim 1, **characterised in that** the first element (3) is conformed and arranged so as to be able to rest and press on an upper surface of the tile stack (10).

4. The device of claim 1, **characterised in that** the first element (3) and the second element (4) are fixed with respect to the gripping organ (2).;

5. The device of claim 1, **characterised in that** it comprises: means for rotating of known type which act on the third element (5) and bring the third element from the inactive position into an intermediate position in which the third element (5) is arranged parallel to the second element (4); means for translating, of known type, for bringing the third element (5) from the intermediate position into the active position.

6. The device of claim 1, **characterised in that** it comprises a pressure adjusting device of known type for regulating at a predetermined level a pressure exerted on the tile stack (10) by the third element (5) when the third element (5) is in the active position.

7. The device of claim 1, **characterised in that** the first element (3) and the third element (5) exhibit surfaces which come into contact with the tile stack (10) which surfaces are made of material having a high friction coefficient.
